(19)

Europäisches
Patentamt

European
Patent Office

Office européen
des brevets

(11) **EP 3 624 905 B1**

(12) **EUROPEAN PATENT SPECIFICATION**

(45) Date of publication and mention
of the grant of the patent:
**12.07.2023 Bulletin 2023/28**

(21) Application number: **18729052.3**

(22) Date of filing: **18.05.2018**

(51) International Patent Classification (IPC):
*A63B 45/00* (2006.01)       *A63B 41/08* (2006.01)
*B29C 65/00* (2006.01)       *B29D 22/02* (2006.01)
*B29D 22/04* (2006.01)       *B29C 65/02* (2006.01)

(52) Cooperative Patent Classification (CPC):
(C-Sets available)
**A63B 45/00; A63B 41/085; B29D 22/02;**
**B29D 22/04;** A63B 2209/00; B29C 65/08;
B29C 66/133; B29C 66/24249; B29C 66/3452;
B29C 66/4326; B29C 66/54; B29C 66/71;
B29C 66/712; B29C 66/729; B29C 66/73921;

(Cont.)

(86) International application number:
**PCT/EP2018/063096**

(87) International publication number:
**WO 2018/211075 (22.11.2018 Gazette 2018/47)**

(54) **SPORTS BALL'S CASING AND METHODS OF MANUFACTURING A SPORTS BALL'S CASING USING ULTRASONIC WELDING**

GEHÄUSE EINES SPORTBALLS UND VERFAHREN ZUR HERSTELLUNG EINES SPORTBALLGEHÄUSES MITTELS ULTRASCHALLSCHWEISSEN

ENVELOPPE DE BALLON DE SPORT ET PROCÉDÉS DE FABRICATION D'UNE ENVELOPPE DE BALLON DE SPORT PAR SOUDAGE PAR ULTRASONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2017 DK PA201770359**

(43) Date of publication of application:
**25.03.2020 Bulletin 2020/13**

(73) Proprietor: **Select Sport A/S**
**2600 Glostrup (DK)**

(72) Inventor: **LONGO, Francesco**
**2600 Glostrup (DK)**

(74) Representative: **Aera A/S**
**Niels Hemmingsens Gade 10, 5th Floor**
**1153 Copenhagen K (DK)**

(56) References cited:
**WO-A2-2013/148947     US-B1- 9 486 675**

**(Cont. next page)**

(52) Cooperative Patent Classification (CPC): (Cont.)
B29C 66/81417; B29C 66/83221; B29L 2031/545

C-Sets
B29C 66/71, B29K 2023/06;
B29C 66/71, B29K 2075/00

**Description**

TECHNICAL FIELD

In the field of manufacture of sports balls there are disclosed sports balls comprising a plurality of panels, wherein the panels have been ultrasonically bonded and wherein the inter-panel bond strength is comparable to the inter-panel bond strength obtainable from machine sewing. Further, methods of making a sports ball's casing are disclosed.

BACKGROUND

Inflatable sports balls comprising a casing and an internal bladder, such as e.g. soccer balls, hand balls, volley balls, basket balls or balls for American football, are consumer products, which are distributed both on mass consumer markets as well as for high-end use by professional athletes. Most sports balls, which are not strictly for home use, at least comprise a sports ball casing manufactured from a plurality of flange bonded panels and an internal bladder. Such sports balls are preferred in the market due to the possibility for varying the construction and the shape of the panels. Thereby is imparted tailored physical properties to the sports balls, such as layered panel structures for improved bounce or specific aerodynamic properties to the finished sports balls, which cannot be obtained otherwise. The present invention relates to such sports balls comprising a casing manufactured from a plurality of flange bonded panels and an internal bladder. In particular, the present invention relates to soccer balls, hand balls, basket balls or volley balls, and more particularly to soccer balls and hand balls.

For the mass consumer market, sports balls for children and for beach use can be fully or partially molded and may comprise welded seams between panels. Such welded seams, however, are located in the plane of the balls surface, which provide a very low protection to the weld during use, making such sports balls unsuitable for anything but play for leisure. The present disclosure does not relate to such sports balls, rather, it relates to sports balls wherein the weld seam is located essentially at right angles to the surface of the sports ball when the sports ball is inflated. This protects the seam from damage during competitive play and further creates a characteristic system of grooves between the constituent panels on the sports balls, which greatly influences the aerodynamic properties of the resulting sports balls compared to the sports balls with inplane seams.

Conventional sports balls, in the meaning used in the context of the invention, typically comprise stitched sport balls casings, wherein the constituent panels are stitched together along adjacent panel flanges. The casings are then turned inwards in subsequent process steps, resulting in a sports ball with the seams directed inwards at right angles to the surface of the resulting sports ball. Unfortunately, such sports balls have significant drawbacks in terms of production efficiency and cost. The labor cost for hand sewn sports balls is high and increasing, in particular as new stitchers are not entering the industry, whereas panels sewn together using machine stitching generally cannot match the quality of the hand sewn sports balls. Also manufacturing time for a hand stitched ball is long and the average manufacturing rate per day is 3-4 soccer balls in 8 hours for an experienced stitcher. A further drawback from a cost perspective, are high losses of materials and discarded balls due to less than optimal reproducibility of the manufacturing process. For the high-end market, conventional stitched sports balls likewise have important drawbacks if the quality of the seam is not adequate, e.g. as water may penetrate the casing under wet conditions, whereby the sports balls become too heavy for proper play.

For these reasons, glued or laminated sports balls have become increasingly marketed as alternatives to stitched sports balls due to their generally cheaper production cost and better production reproducibility. Nevertheless, these sports balls suffer from reduced durability, in particular for high-end use, as they are more susceptible to damage during use from kicking or hitting due to low inter-panel bond strength.

Glued sports balls are, in general, glued along the entire length of two abutting panel flanges, resulting in a continuous seam, whereas stitching by nature results in a seam wherein the number of attachment points along the full length of the seam is determined by the number of stitches per unit length. As is known in the art, the number of stitches per unit length must be sufficiently large to prevent the sewn panels from having the stitches pulled out of the panels during play, a problem ever-present in cheap, but low quality, sewn sports balls. The same problem, naturally, can occur in insufficiently glued sports balls.

In general, the inter-panel bond strength measured as pulling force to overcome the inter-panel bond is around 20-40 N for thermo-bonded sports balls, e.g. where two panels have been glued together along abutting flanges, including thermocured adhesives, whereas the inter-panel bond strength for two panels machine sewn together along comparative, abutting flanges can have inter-panel bond strengths panels over 120N and up to 150 N measured as pulling force to overcome the inter-panel bond. At such high inter-panel bond strengths as seen for sewn sports balls panel, the bond strength is comparable to the rupture strength of the panels themselves and improvements to attachment above these inter-panel bond strengths are accordingly difficult to obtain, if the suitability of the resulting ball for sports is to be preserved.

In recent years, c.f. e.g. US 8,262,519, there has been invested significantly in finding a suitable compromise between low cost manufacturing and ball durability through the introduction of welded panel seams rather than sewn panel seams and bonding panels using welding have been suggested repeatedly in the art, including conduction heating, radiant heating, radio frequency (RF) heating, ultrasonic heating, or laser heating. In principle, welding allows for a continuous seam along an entire panel side as well as for a discontinuous seam in parallel to stitched panels, depending on the construction of the weld head. One such direct welding method is disclosed in WO 2013/148947.

A persistent problem in panel flange welding performed as described in WO 2013/148947 is that heating is from the inside and out (i.e. from the side of the flange that is not in contact with a weld partner), hence the interlayering material between the heat source and the material to be welded is heated to higher temperatures than the weld material itself. This leads to heat damaging of the welded panels, which is highly undesired in the manufacturing process. In particular in modern sports balls wherein today the outer material (or leather) is almost exclusively made from polymeric materials, which can may be thermolabile, such as polyurethane (PU), and where the inner sheet typically is manufactured from foamed, polymeric materials, such as e.g. poly-ethylene-vinyl-acetate (EVA), burning of the outer and inner layers during welding is a non-negligible problem, potentially resulting in hardened, inflexible, and unbendable seams, which can render a welded sports ball unsuitable for use.

The present inventor has now surprisingly discovered that a number of the hitherto recognized drawbacks to the application of welding technology in the production of inflatable sports balls comprising a casing manufactured from a plurality of flange bonded panels and an inner bladder can, at least for ultrasonic welding, be overcome by decoupling the weld seam from the weld head by arranging a thin, not weldable flange layer adjacent to the weldable layer between the weld head and the panel flanges to be welded. Following this guidance, the inventor has manufactured a variety of ultrasonically welded sports balls wherein the inter-panel bond strength is in excess of 100 N, or 120 N pulling strength. In fact, it appears that the actual inter-panel bond strength is in excess of 150 N pulling strength and that panel rupture is likely to occur prior to bond rupture. This puts the welded panels seams produced by the method of the invention at least on par with machine sewn seams, potentially even on par with hand sewn seams.

SUMMARY OF THE INVENTION

In a first aspect and embodiment of the invention there is disclosed a method of making a sports ball's casing (la,lb), the casing (1a,1b) comprising a predetermined plurality of flange welded panels (3), and defining an exterior surface (2a) comprising a network of grooves (9), and an interior surface (2b) comprising a network of weld seams (4) oriented substantially perpendicular to said exterior surface (2a), each panel (3) comprising a weldable, thermoplastic outer layer (31) for forming part of said exterior surface (2a) and a further layer (32,33,34) for forming part of said interior surface (2b), and where on each panel (3) there is defined a panel center area (13,23) peripherally enclosed by flanges (11,21), said flanges (11,21) comprising at least a part of said weldable, thermoplastic outer layer (31); said method comprising: i. providing at least a first (41) and a second (42) panel (3) comprising respective flanges (11,21); ii. providing on a respective flange (11,21) a thin, not weldable flange layer (34) adjacent to the weldable, thermoplastic outer layer (31); iii. forming a weld seam (4) using ultrasound between the thermoplastic outer layer (31) of a respective flange on the first panel (41) in contact with the thermoplastic outer layer (31) of an abutting, respective flange on the second panel (42) thereby forming a combined panel such that the thin non weldable flange layer (34) is positioned adjacent to the weldable layer (31) between an ultrasound weld head and the panel flanges when forming a weld seam (4).

In a second embodiment there is disclosed a method according to the first embodiment comprising: iv. welding a further and free flange (11,21) of said combined panel to a respective further flange (11,21) of a respective further panel (3) along abutting respective flanges (11,21); and v. repeating adding and welding panels until substantially all respective flanges of said predetermined plurality of panels (3) are welded to respective, matching flanges on respective further panels.

In a third embodiment there is disclosed a method according to any of the previous embodiments, wherein one panel (7) comprises a valve (8).

In a fourth embodiment there is disclosed a method according to any of the previous embodiments, wherein the thin, not weldable flange layer (34) is selected from a polymer foam material, a non-thermoplastic foam, a collapsed polymer foam material, a fabric or combinations thereof.

In a fifth embodiment there is disclosed a method according to any of the previous embodiments, wherein said thin, not weldable flange layer (34) is manufactured in-situ prior to welding.

In a sixth embodiment there is disclosed a method according to any of the previous embodiments, wherein a triple-point (86) between three adjacent flanges (21a,21b,21c) is closed by welding.

In a method at least useful for understanding the invention there is disclosed a method of making a sports ball comprising providing a casing (1a,1b) made according to any of the embodiments of the first aspect, turning said casing (la,lb), placing a bladder (5) or a bladder (6) in a protective sheath (6) inside said casing (1a,1b) and joining any remaining, respective flanges to a respective opposite flange.

Finally, there is disclosed a welded sports ball, wherein the inter-panel bond strength is in excess of 100 N pulling strength, and a welded sports ball, wherein the inter-panel bond strength is in excess of 100 N pulling strength and made according to any of the methods disclosed herein above and below.

BRIEF DESCRIPTION OF THE DRAWINGS

Figure 1:     Examples of sports balls.
Figure 2:     Examples of sports ball panels.
Figure 3:     Examples of sports ball panel cross-sections.
Figure 4:     Examples of welded seams between adjacent panels.
Figure 5:     Examples of sports ball panel cross-sections.
Figure 6:     Examples of sports ball panel cross-sections.
Figure 7:     Examples of sports ball panel cross-sections.
Figure 8:     Triple point welding arrangement.

DEFINITIONS

An outer layer of the sport ball casing in the sense of the present application shall be understood as the layer facing outward in a finished ball comprising a casing and an inner bladder.

An inner layer of the sport ball casing in the sense of the present application shall be understood as the layer facing inward in a finished ball comprising a casing and an inner bladder.

A further layer of the sport ball casing in the sense of the present application means a layer positioned between the outer layer and an inner layer.

A non weldable material as defined in accordance with the present invention shall be understood as a material which does not become weldable under ultrasonic heating conditions, even if it may otherwise soften or melt.

DETAILED DESCRIPTION

In accordance with the invention, the inventor has pursued the production of inflatable sports balls comprising a casing (1a,1b) manufactured from a plurality of flange welded panels (3) and an inner bladder by using various methods of ultrasonic welding and through decoupling the weld seam (4) from the ultrasonic weld head by applying a thin, not weldable flange layer (34) on the panel flange (11,21) and adjacent to the weldable layer (31) between the weld head and the panel flanges to be welded.

In accordance with the invention there is therefore disclosed a method of making a sports ball's casing (la,lb), the casing (1a,1b) comprising a predetermined plurality of flange welded panels (3), and defining an exterior surface (2a) comprising a network of grooves (9), and an interior surface (2b) comprising a network of weld seams (4) oriented substantially perpendicular to said exterior surface (2a), each panel (3) comprising a weldable, thermoplastic outer layer (31) for forming part of said exterior surface (2a) and a further layer (32,33,34) for forming part of said interior surface (2b), and where on each panel (3) there is defined a panel center area (13,23) peripherally enclosed by flanges (11,21), said flanges (11,21) comprising at least a part of said weldable, thermoplastic outer layer (31); said method comprising: i. providing at least a first (41) and a second (42) panel (3) comprising respective flanges (11,21); ii. providing on a respective flange (11,21) a thin, not weldable flange layer (34) adjacent to the weldable, thermoplastic outer layer (31); iii. forming a weld seam (4) using ultrasound between the thermoplastic outer layer (31) of a respective flange on the first panel (41) in contact with the thermoplastic outer layer (31) of an abutting, respective flange on the second panel (42) thereby forming a combined panel such that the thin non weldable flange layer (34) is positioned adjacent to the weldable layer (31) between an ultrasound weld head and the panel flanges when forming a weld seam (4).

In a non-limiting example, the thin non weldable layer may be an additional layer or may be formed in-situ by collapsing an adjacent second or middle layer (32) as described below.

In an embodiment the method further comprises: iv. welding a further and free flange (11,21) of said combined panel to a respective further flange (11,21) of a respective further panel (3) along abutting respective flanges (11,21); and v. repeating adding and welding panels until substantially all respective flanges of said predetermined plurality of panels (3) are welded to respective, matching flanges on respective further panels.

In an embodiment the method further comprises adding a valve panel (7) comprising a valve (8).

In an embodiment the method further comprises selecting the thin, not weldable flange layer (34) from a polymer foam material, a collapsed polymer foam material, a non-thermoplastic foam, a fabric or combinations thereof. The only important property of the non weldable flange layer (34) is its inability to be welded when applying ultrasound.

In one of the preferred embodiments, the thin non weldable flange layer (34) is a non-thermoplastic foam layer.

In an embodiment the method further comprises manufacturing said thin, not weldable flange layer (34) in-situ prior to welding.

In an embodiment the method further comprises closing a triple-point (86) between three adjacent flanges (21a,21b,21c) by welding.

A method at least useful for understanding the invention is disclosed, the method being a method of making a sports ball comprising providing a casing (1a,1b) made according to any of the embodiments of the method of making a sports ball's casing, turning said casing (la,lb), placing a bladder (5) or a bladder (6) in a protective sheath (6) inside said casing (1a,1b) and joining any remaining, respective flanges to a respective opposite flange.

Further, there is disclosed a sports ball made according to any embodiment the present invention. The sports ball preferably is a soccer ball or a hand ball.

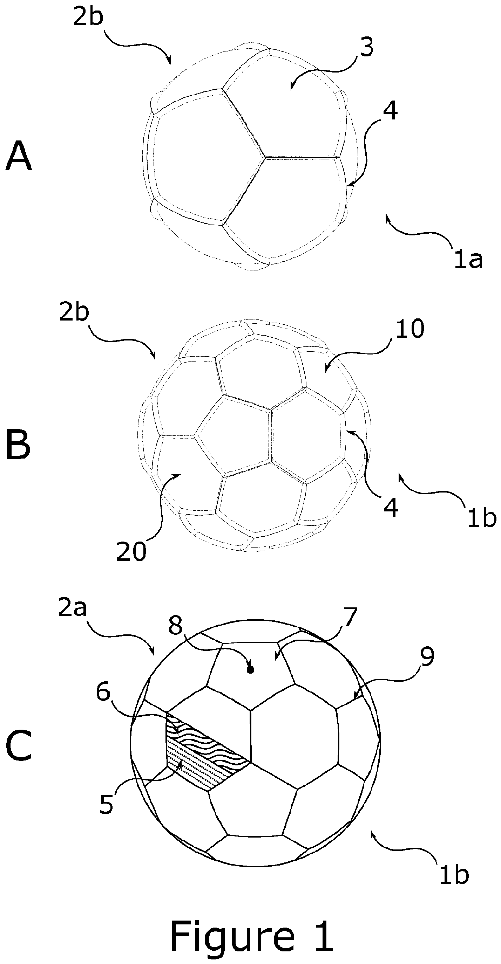

Conventionally, sports balls' casings (1a,1b) are manufactured in all sizes. Figure 1 illustrates conventional sports balls' casings (1a,1b) made from pentagon shaped panels (10) or a combination of pentagon (10) and hexagon shaped panels (20). E.g. 12 pentagons (10) may be combined to form a 12-panel sports ball's casing (1a), in the same manner as 12 pentagons (10) and 20 hexagons (20) can be combined to form a 32-panel sports ball's casing (1b). The sports balls' casings (1a,1b) of Figures 1A, 1B are shown reversed as they appear during the process of attaching the panels (3) together in the conventional manner described in further detail below with seams (4) projecting outwards, whereas the 32-panel sports ball's casing (1b) of Figure 1C is shown as the finished casing after turning the casing to direct the seams (4) inwards. Thereby an exterior surface (2a) and an interior surface (2b) of a respective casing (1a,1b) is defined. As such, and while the casings of the present invention in particular and preferred refer to such 12-panel (1a) and 32 panel (1b) sports balls casings made from pentagons (10) or pentagons (10) and hexagons (20) in combination, the panel structure rather than its geometry is the subject matter of the present invention.

In order to provide a sports ball of the type contemplated herein, an inflatable bladder (5) must be located inside the sports ball's casing, the bladder (5) being in fluid communication with the exterior via a valve (8) arranged throughgoingly in a designated valve panel (7). The panels (7,10,20) are separated by a network of grooves (9) with strong aerodynamic influence on the assembled sports ball, such grooves being characteristic of the group of sports balls to which the sports balls of the present invention pertain. Typically, and as illustrated in the cut-out on Figure 1C, the inflatable bladder (5) will comprise an external, shape determining and protective sheath (6), typically manufactured from a textile or glued layers of textile. The present disclosure does not concern itself with developments within technical fields relating to these constructional elements of the sports balls of the invention, but rather considers it within the competence of the skilled person to select such elements (5,6,7,8) according to the design requirements of a particular sports ball, in order to complete a sports ball of the invention, after having manufactured a sports balls casing in accordance with the teachings herein.

The present inventor has so far succeeded in manufacturing both 12-panel and 32-panel sports balls using ultrasonic welding in accordance with the invention, but due to the nature of ultrasonic welding, most (if not all) panel shapes suitable for sports balls are viable for use with ultrasonic welders. It merely requires adaptation of the ultrasonic sonotrode and the anvil to the geometry of the panels, which is within the skills of skilled makers of ultrasonic welders and is outside the scope of the present invention.

As such, there is disclosed herein a welded sports ball, wherein the inter-panel bond strength is in excess of 100 N pulling strength, preferably in excess of 110 N, of 120 N, of 125 N, of 130 N, of 135 N, or even more preferably in excess of 140 N pulling strength. Preferably, pulling strength is measures as static pulling strength. In a preferred embodiment, the welded sports ball is made according to the methods disclosed herein above and below.

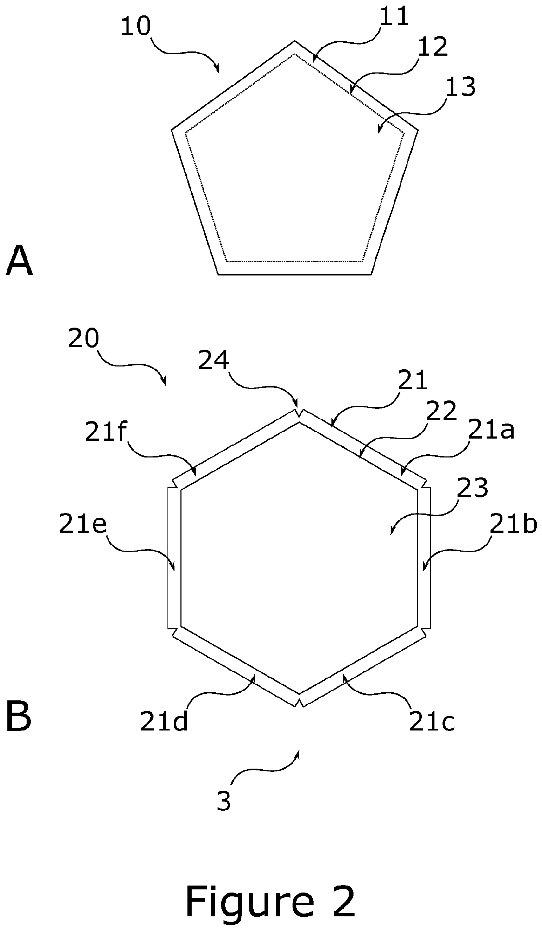

Figure 2 depicts the conventional sports balls panels (3) in the form of pentagons (10) and hexagons (20) which have been chosen throughout the present disclosure for illustrating the invention rather than more complex geometries. Within the context of the present disclosure, the panels (3) can be referred to by their geometry, but it shall however be understood, that this is merely a convenient short-form for the longer expression "a sports balls panel of a given particular geometry". Likewise, the discrimination between flanges on pentagonal panels and hexagonal panels discussed below are for illustrative purposes only, and are not limiting on the invention.

On the panels (10,20) are indicated panel center areas (13,23) peripherally enclosed by flanges (11,21). In use, panel center areas (13,23) will form that part of the casings (1a,1b) that are presented to a player, whereas the flanges (11,21) will form part of the seams (4).

As is customary when manufacturing sports balls, e.g. by sewing, and in order to attach two panels to each other correctly, a respective flange from each of the two panels is brought into contact with an opposite, upon which the panels are bonded along the flanges. In subsequent process steps, a further and free flange of the combined panel is bonded to a further flange of a further panel along abutting respective flanges; whereafter the procedure is repeated until (almost) all flanges have been bonded to matching flanges on opposing panels. Usually, a few flanges remain un-bonded to allow the casing to be turned, followed by the placing of bladder (5) or bladder (6) and protective sheath (6) inside the casing after which, the remaining panels are closed by gluing or sewing. This technique is well-known in the art of making sports balls and is not further detailed herein.

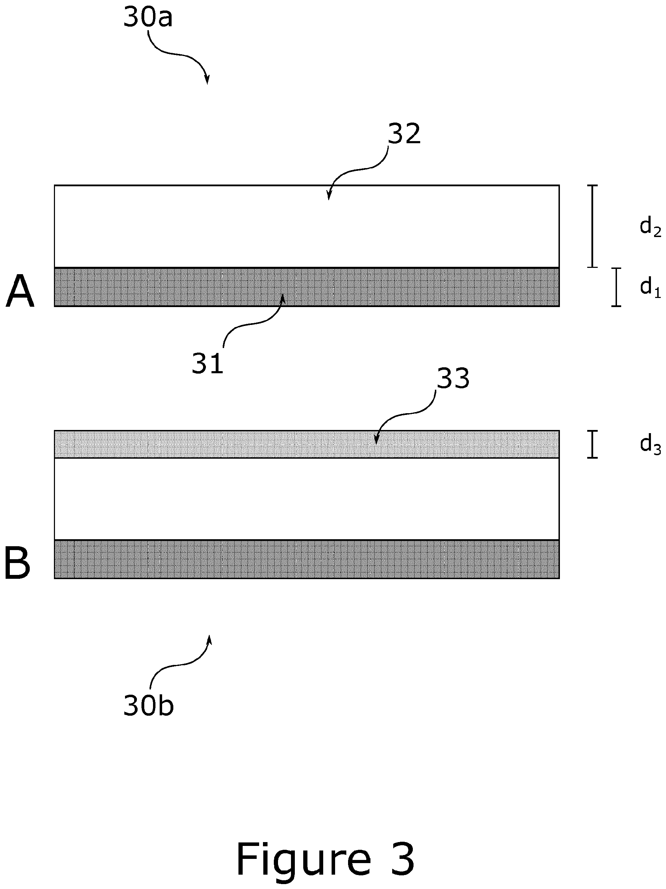

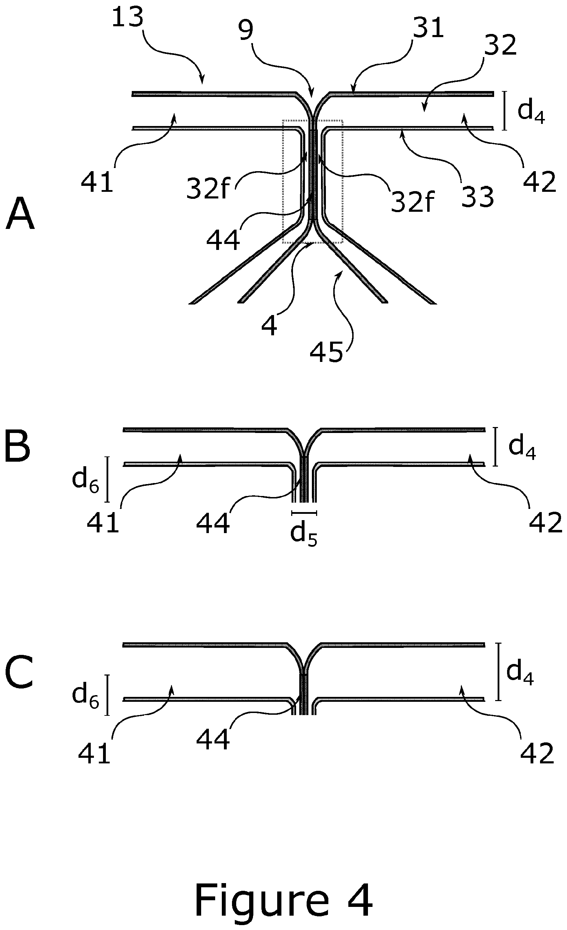

In Figure 2A, the panel (10) is homogeneously thick (c.f. Figure 3), and the flange (11) is not visible in the panel structure but rather corresponds to the outmost part beyond the dotted line (12). For guidance to a stitcher, markings can have been provided on the panel, but this does not influence the panel structure. Relevant is only, that after bonding the panel center area (13) inside the dotted line (12) will become the part of the panel in the finished ball that is exposed, or exposed after turning of the casing, to the exterior, whereas the flange (11) will reside either between neighboring panels or between neighboring panels but also partly into the interior of the sports ball as shown schematically in Figure 4.

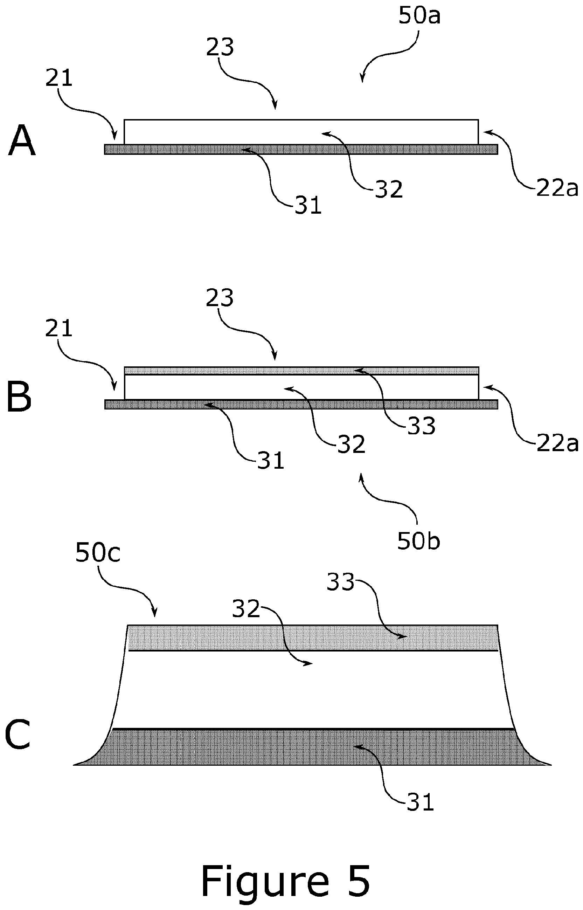

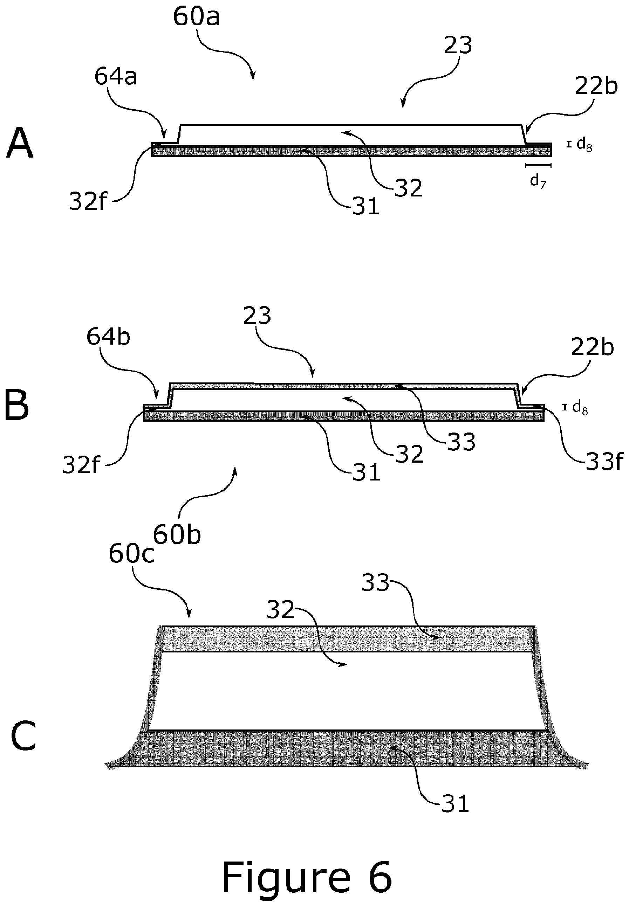

The panel (20) illustrated in Figure 2B on the contrary has a step-like transition (22) between the panel center area (23) and the flange (21). As illustrated in Figures 5 and 6, it is contemplated that the step-like transition (22) can be abrupt (22a) or extend over a narrow region (22b), i.e. being graded, however this is in general not limiting on the invention, and steps of any extension between abrupt (panel 20) and none at all (panel 10) are possible as discussed herein below. However, the step-like transition (22) serves to provide a clear demarcation between the panel center area (23) and the flange (21) and hence is a direct marker of the flange (21) suitable for e.g. indicating the area for bonding by welding.

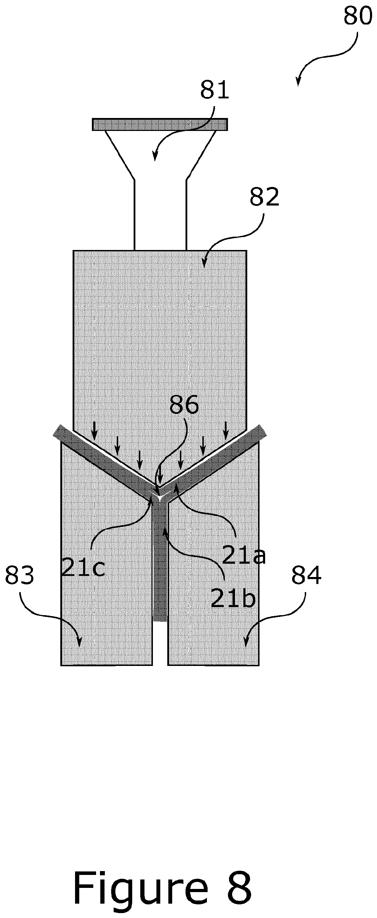

Further, notches (24) have been indicated at the corners of the flange (21), thereby effectively creating a plurality of flange sections (21a-f) as is known in the art. Notches (24), as is known in the art, serve to remove surplus parts of the flange, which are not needed for bonding, but nevertheless would add weight to the finished ball in addition to increasing the stiffness of the corners. In some embodiments of the invention, therefore, notches (24) are employed in accordance with their use in the prior art. Generally, notches (24) can be varied with respect to depth and width in accordance with normal design considerations, including dividing the flange into a plurality of separate flanges. However, as detailed herein below (c.f. Figure 8), improved stability of the casing can be achieved if triple points between three adjacent panels are co-welded, which in particular serves to prevent water-penetration through unwelded pores in the casing during wet playing conditions. Hence, it is not in general contemplated to use notches (24) which create a plurality of separate flanges on a panel, but rather, and in general, it is contemplated, when used, to use notches (24) which create a plurality of flange sections (21a-f).

Figure 3 details cross-sections of two panels (30a,30b) without any emphasis on the actual geometry of the particular panel. The panel cross-section shown in Figure 3A corresponds to a panel (30a) comprising a first or outer layer (31) and an adjacent second or middle layer (32). In the panel cross-section shown in Figure 3B, the panel (30b) further comprises a third or inner layer (33) such that in this configuration, middle layer (32) is positioned between and adjacent to the outer (31) and inner (33) layers, which layers thereby effectively form cover layers located on opposite sides of middle layer (32). The layers are affixed to each neighbor, typically using non-hardening adhesives such as natural latex, as is known in the art. These glue layers are not shown in the figures, as they are much thinner, in comparison, to the layers 31-33 and do not influence the welding process to any significant degree. The layers 31-33 are of an individual, respective thickness ($d_1, d_2, d_3$), which can be varied independently, depending on the design requirements of a particular sports ball.

As is customary in the art, the outer layer (31) is intended for presentation to the exterior of the sports ball during use and hence is made from polymer materials that impart a durable and wear-resistant exterior surface for the same ball. As the outer layer (31) in the context of the present invention also in all embodiments of the invention will form part of the flange (11,21) which will undergo welding on a respective panel (3), it is further a weldable thermoplastic. Suitable weldable thermoplastic polymers include thermoplastic and/or thermoset polyurethane (TPU), polyamide (TPA), polyester (TPES), polyethylene (TPE) polypropylene (TPP), and polyolefin (TPO). Particularly preferred are thermoplastic polyurethanes (TPU).

The thickness ($d_1$) of the outer layer (31) will generally lie between 0.1 mm to 3.0 mm, between 0.5 mm to 2.9 mm, between 0.8 mm to 2.7 mm, between 1.0 to 2.6 mm, between 1.2 mm to 2.5 mm, between 1.4 mm to 2.4 mm, between 1.7 mm to 2.3 mm, between 1.8 to 2.2 mm, between 1.9 mm to 2.1 mm, or it can be 1 mm, 2 mm or 3 mm. In this respect it is important to balance the thickness of the outer layer to the penetration depth of the weld zone (44) between panels during welding, cf. Figure 4. Nevertheless, the thickness ($d_1$) of the outer layer (31) must be sufficient to allow a stable melt in the weld zone (44) to build up in both adjacent outer panel layers to be melted on two adjacent panels (3), such that the layers can unify and a form a stable weld after cooling. However, due to the stiffness added to the seam (4) by the melt zone, it is important, that the melt zone (44) does not propagate into the further layers of the sports balls' panels (3) .

As is customary in the art, the middle layer (32) serves as support for the outer layer (31), while at the same time providing the resulting panel (3) with a cushion layer for protection of the players using the resulting sports ball. The middle layer (32) will generally be manufactured from a polymer foam material as a single layer, but can in some embodiments consist of further sandwiched layers, e.g. polymer foam materials of different densities. Suggested polymer foam materials are e.g. poly-ethylene-vinyl-acetate foam (EVA), poly-olefin foam (POE), poly-ethylene-propylene-diene foam (EPDM), low-density polyethylene foam (LDPE), thermoplastic polyethylene foam (TPEF), or poly-vinylchloride foam (PVC). As is customary in the art, the foam thickness ($d_2$) can be from between 0.5 to 7.5 mm of thickness or any value therein between, preferably 2 mm, 3 mm, 4 mm, 5 mm, 6 mm or 7 mm, and even more preferably 3 to 5 mm of thickness.

The exact construction of the middle layer (32) is outside the scope of the present invention. In general, the middle layer (32) can be tailored to meet any particular requirements of a given sports ball as desired, particularly with respect to cushion softness and bounce as desired by the skilled person.

The middle layer (32) and the polymeric foam materials chosen should preferably be sufficiently resilient to thermal influences that the middle layer (32) does not decompose during the weld process. Unfortunately, this is not generally the situation as (due to the included air in the foam) such polymeric foam materials in general are very good insulators and hence absorb significant amounts of heat prior to transmitting heat energy by normal heat diffusion into the thermoplastic outer layer (31).

A further problem with the middle layer (32), when it is present on the flange part (11) of the panel (10), is that it will attenuate the ultrasonic sound waves proportional to its thickness, which is another source of undesired heating in the middle layer (32) and insufficient heating in the melt zone (44).

In particular, if the foam is thermolabile, as is normally the situation, it is a persistent problem, when foam is present in the flange part (11) of the panel (10), that the foam will irreversibly decompose and form a second melt zone during welding. As, due to the nature of ultrasonic welding, sound energy is deposited more strongly in plasticized/melted material than in semi-crystalline/un-melted plastics, the formation of a second weld zone closer to the weld head than the intended weld zone, will lead to insufficient heating in the intended weld zone and low resulting panel cohesion. Such behavior of the foam is therefore, undesirable.

Surprisingly, as discussed below, the inventor has discovered that an optimized weld seam can be manufactured by including a thin, not-weldable material between the weldable outer layer (31) and the weld head during welding.

The non weldable layer in accordance with the invention may be provided as a separate flange layer or as a non weldable layer formed in-situ from the weldable middle layer (32) as described in one of the examples of the invention.

In one of the embodiments, the non-weldable material is the non-thermoplastic foam. The advantage of this material is that apart from being non-weldable and contributing to the proper heat distribution to the areas to be welded, the foam structure of this material provides the ball with strength, structure and bounce.

In some embodiments the non-thermoplastic foam forms a middle layer (32) of a sport ball's casing.

It is customary in the art (cf. Figure 3B), but not in any manner mandatory, to apply an inner layer (33) of panel backing material as a third panel layer. This is normally done in order to protect that surface of the middle layer (32), which faces the interior of the sports ball, from abrasion against the bladder (5) or the sheath (6) comprising the bladder (5) during ball use, which abrasion can result in deteriorated foam and middle layer (32) and/or punctures to the bladder (5).

Customarily, the inner layer (33) is manufactured from a fabric, whether woven or non-woven, of varying strength and stretchability. The thickness ($d_3$) should not, in general, exceed 0.2 mm and in the context of the present invention preferably should not exceed 0.1 mm. The thread preferably can be a high-tensile strength, hard spun, yarn, as sound waves from the ultrasonic weld head travel easily through such yarns without depositing significant amounts of energy in the inner layer (33). Suitable choices of tensile strengths preferably are above 200 N pulling strengths in order to exceed the strength of the seam, but less is equally suitable (cf. examples below) for sports panels, where it is acceptable that the panels may disrupt before the seam. In general, the yarn can be manufactured from natural sources such as cotton or hemp or be manufactured from an artificial polymeric material, preferably a high density polymeric material, as long as the melting temperature of the yarn, alternatively its decomposition temperature, is higher than the melting temperature of the thermoplastic material of the outer layer (31).

Figure 4 details some elements of an ultrasonically welded seam (4) (inside dotted box) in cross-section between a first (41) and a second (42) panel, each respective panel based on the panel (30b) of Figure 3B comprising outer (31) and inner layers (33) with a middle layer (32) sandwiched therebetween. The initial thickness of the panels ($d_4$) is simply the sum of the thicknesses of the constituting panel layers ($d_1+d_2+d_3$). The resulting weld thickness ($d_5$) of the weld (4) is smaller than twice the initial thickness ($d_4$), as the foam of the middle layer (32) is brought to collapse during the ultrasonic welding process, thereby forming collapsed foam layers (32f). The thickness of the weld zone (44) remains largely twice the thickness ($d_1$) of the thermoplastic outer layer (31), and likewise where the inner layer (33) is present, also the inner layer thickness ($d_3$) remains largely unchanged (Figure 4B). Depending on the initial thickness of the middle layer (32), the resulting weld thickness may naturally still exceed the initial panel thickness, but in general it will not.

The welded panels shown in Figure 4 are similar to the pentagonal panels (10) of Figure 2A in that flange (11) and panel center area (13) are not initially discernible due to the panels having a uniform thickness and construction (cf. Figure 3B). Usually, the weld seam (4) will be welded to a desired weld seam length ($d_6$), but in some embodiments, the weld seam (4) may exhibit a flange rest (45) which can be trimmed to yield a weld seam of the desired length ($d_6$). Thus the panels can be welded together with a broader or longer seam than necessary and the panels subsequently trimmed to an appropriate length ($d_6$) which, while adding a manufacturing step, increases manufacturing tolerances. Depending on the thickness of the panels ($d_4$) more or less of trimmed weld seams of equal length ($d_6$) may be located

within the panels rather than protruding below the welded panels (Figure 4B,4C) while providing the same inter-panel bonding strength. No particular limitations are placed on the weld seam length (d6), but obviously, the broader or longer the weld seam, the stronger the inter-panel bonding strength per unit length (d6) will be.

Figure 5 details two panel-types (50a,50b) wherein a step-like transition (22) between the panel center area (23) and the flange (21) is present as discussed above in relation to Figure 2. In the art, such panels are typically manufactured by cutting or stamping the outer layer (31) and middle layer (32) to size independently and subsequently affixing the middle layer (32) onto the outer layer (31) by gluing. However, the actual method of manufacturing is not of importance to the present invention, only the end result wherein the flange (21) consists of the outer layer (31) only, or possibly with a negligible glue layer.

The examples below detail experimental comparisons between the panels of Figure 2 and the panels of Figure 5.

Figure 6 details further examples (shown in cross-section) of various panels (60a,60b) constructed according to the guidelines provided by the present disclosure, wherein the panels are suitable for use in the methods of manufacturing a sports ball's casing as disclosed herein. The panels (60a,60b) correspond to the panels (20a,20b) respectively, after the foam of the middle layer (32) on the flanges (21) has been collapsed on the flanges (21), thereby forming a thin, collapsed foam layer (32f) on the same flanges (21).

In Figure 6A, the desired thin, not weldable flange layer (64a) adjacent to the weldable layer (31) is constituted by the thin, collapsed foam layer (32f) on the flange, whereas in Figure 6B, the desired thin, not weldable flange layer (64b) adjacent to the weldable layer (31) is constituted by the thin, collapsed foam layer (32f) together with that part (33f) of the inner layer (33) that is located on the flange (21) .

In these embodiments, the thin, not weldable flange layer adjacent to the weldable layer is present only on the flange.

It is preferably, that the desired thin, not weldable flange layer (64a,64b) adjacent to the weldable layer covers the entire flange (21), however in some embodiments it may cover less than the entire flange, e.g. when the weld seam is not continuous but rather is a spot welded seam, as long as the thin, not weldable flange layer (64a,64b) adjacent to the weldable layer is present at substantially all weld spots.

In the context of the present invention therefore, the phrase "a thin, not weldable flange layer" shall be understood to mean, that the thickness of the layer of the not weldable material is such, that it substantially does not attenuate ultrasonic wave energy during welding. In the same context "substantially does not attenuate ultrasonic wave energy during welding" shall be understood to mean that the thin, not weldable flange layer does not attenuate ultrasonic wave energy by more than 25%, by more than 20%, by more than 15%, by more than 10%, by more than 8%, by more than 6%, by more than 4%, by more than 2% or is substantially opaque to ultrasonic wave energy.

In terms of size, this means that the desired thin, not weldable flange layer has a material thickness ($d_8$), which preferably is smaller than the thickness $d_1$ of the outer layer (31) in order to avoid an unnecessarily stiff weld seam. Preferably the thin, not weldable flange layer has a material thickness ($d_8$) smaller than $d_1$ by at least 10%, by at least 20%, by at least 30%, by at least 40%, preferably by at least 50%, more preferably by at least 60%, even more preferably by at least 70%, and most preferably by at least 75%. In the embodiment (60b) shown in Figure 6B, $d_8 > d_3$ as the thin, not weldable flange layer (64b) comprises the inner layer (33).

The step-like transition (22b) at the edge of the flange is graded in the shown embodiments, which can be advantageous in situations where the extension ($d_7$) of the flange (21) is too short for adequate positioning of the welding tool, without contacting the panel center area (23), and where the weld parameters are otherwise so, that burning of the foam of the middle layer (32) could occur through such undesired contact. However, transition (22b) is not limited to the step-like shape as on Figure 6A and B and can, for example, be of a rounded shape, cf. Figure 6C.

Figures 5C and 6C shows the flange with the rounded edges, wherein the inner layer (33) is optional and can be dismissed with as shown on Figure 5A and 6A.

Carving is a suitable technique for a formation of both step-like edges as on Figures 5A and B, and 6A and B, and for a formation of the rounded edges as shown on Figure 5C (22c) and Figure 6C (22d). Carving is more suitable when the flange edges of a rounded form are required.

When the edges can have straight lines, embossing provides more precise edge formation thereby improving quality of the edges of the flange.

In general, the inner layer (33) does not collapse or deform under the influence of ultrasonic energy and hence the thickness of the inner layer on the flange (33f) is at least substantially equal to the thickness of the inner layer (33) on the panel center area (23). Should the inner layer (33) however collapse or deform on the flange (33f) this is in general not considered a problem as the thickness of the inner layer (33) in general is much smaller than the thickness of the middle layer (32) and the outer layer (31), whereby the influences of such an eventual collapse or deformation in general will be negligible.

For manufacturing purposes, the panels (60a,60b) have the advantage over the panels (20a,20b) that they can be manufactured in an independent manufacturing step, which does not involve the otherwise specialized ultrasonic weld head, and can therefore be presented ready for ultrasonic welding in the manufacturing process of the sports ball's casing, contrary to the panels (20a,20b) where the thin, not weldable flange layer (64a,64b) must first be manufactured in-situ. The inventor has observed that the panels (60a,60b) in particular are easily manufactured from panels (20a,20b) by forming flanges (21) using ultrasonic embossing at low energies, i.e. lower than ultrasonic welding energies, to collapse the foam of the middle layer (32) on the flange sections without burning the foam or prematurely heating the outer layer (31).

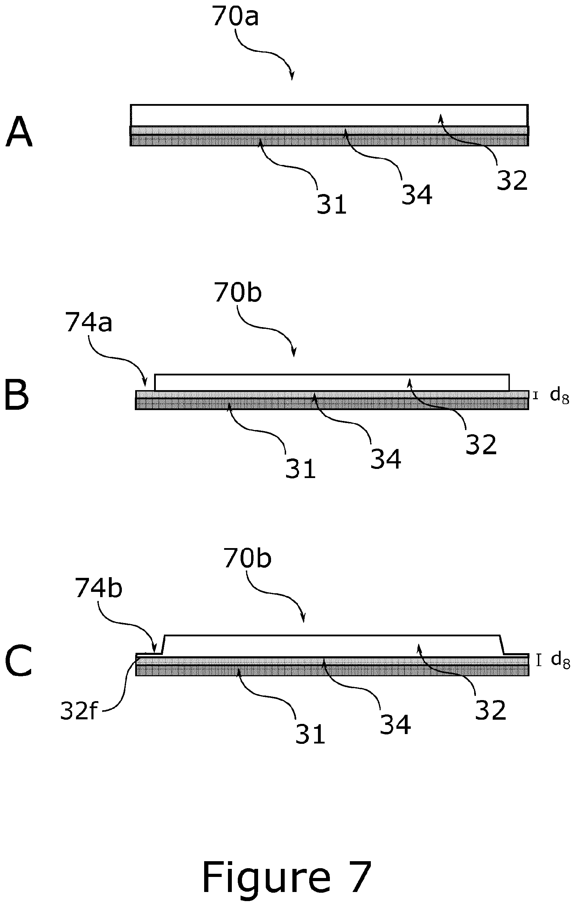

Figure 7 details further embodiments of the panels (70a,70b,70c) suitable for use with the present invention. In these panels, a thin, not weldable layer (34) covers the entire interface between the weldable, outer layer (31) and the middle layer (32), i.e. it is sandwiched between the weldable outer layer (31) and the middle layer (32). This has advantages in manufacturing, in that the flange layer (34) can be adhered directly to the outer layer (31) e.g. by roller assembly, or it can be sandwiched between the weldable outer layer (31) and the middle layer (32) equally simple by e.g. roller assembly.

In these embodiments it is further advantageous, that the thin, not weldable layer (34) can be manufactured from the same materials as otherwise detailed for the inner layer (33) above, which in general will be suitable for the purposes of the invention, e.g. by being non weldable and suitably opaque to ultrasonic wave energy. Nevertheless, it is not required that the thickness ($d_8$) of the thin, not weldable layer (34) shall be identical to the thickness ($d_3$) of the inner layer (33), as this may vary according to the design requirements for a particular sports ball's casing.

The exemplary embodiment of Figure 7B illustrates how the flange layer (74a) may be devoid of a collapsed foam layer (32f), and therefore constituted only from the thin, not weldable layer (34), whereas the exemplary embodiment of Figure 7C illustrates the situation wherein the flange layer (74b) further comprises a small contribution to its thickness ($d_8$) from a collapsed foam layer (32f) on the flange.

In parallel with the embodiments of Figure 6, but not illustrated herein, it is possible to add the inner layer (33) onto the middle layer (32), when this is desired in the design of a particular sports ball. As illustrated for the embodiments of Figure 6, this may lead to embodiments wherein the flange (21) is uncovered, partially covered, or fully covered by the inner layer (33), in addition to being covered by the flange layer (74a) or the flange layer (74b) and a collapsed foam layer (22f).

In some embodiments of the sports ball's casings of the present invention, building on the panels of the embodiments exemplarily shown in Figure 7, the middle layer (32) may also be absent from the sports ball's casing, if this is required by a particular sports ball's design, as the presence of a collapsed foam layer (32f) originating from the middle layer (32) is not required for forming the thin, non weldable flange layer (74a).

Figure 8 discloses a triple-point welding arrangement (80) suitable for use with the present invention, the triple-point welding arrangement (80) comprising a weld-head (81) and a sonotrode (82) and a first (83) and a second (84) anvil arranged to form a Y-shaped space (85) for receiving welded flanges (21a,21b,21c) forming a triple-point (86) between three adjacent sports ball's panels.

It is a general problem in the assembly of sports ball's casings that the triple-point (86) between three adjacent sports ball panels is a weak spot in the construction of sports ball's casings, not only with regards to stability of the construction under external force influences, but also because it allows water to penetrate into the interior of the sports ball during play at wet conditions. It is therefore desirable to close the triple-point between three adjacent panels efficiently in high-quality sports balls, however the task remains difficult, requiring e.g. separate stitching or gluing. Stitching is relatively time consuming but will provide a stronger closure than when glued as discussed above. Using a triple-point welding arrangement (80) as disclosed herein, welding of the triple-point (86) between three adjacent sports ball's panels can be performed in a single manufacturing step at reasonable speed and reproducibility with bonding results comparative to those of the sewn triple-point closures, but at an increased production rate, which is another benefit of the ultrasonic welding methods disclosed herein.

## EXAMPLES

In a comparative experiment, two batches of test panels were manufactured, a first batch corresponding to panel-types 30a and 30b, and a second batch corresponding to panel-types 50a and 50b. The thicknesses of the panel layers (31,32,33) were respectively ($d_1$ = 1 mm, $d_2$ = 4 mm, $d_3$ = 0.1 mm) with latex glue as binder between the layers. The outer layer (31) was manufactured from a conventional thermoplastic poly-urethane (TPU), and the middle layer (32) from a conventional thermolabile PE-foam (TPE) (both materials obtained from Dong Kyung Co. of South Korea), and the inner layer (33), when present, was a knitted, high tensile strength, conventional soccer balls inner layer cloth (Pakistan).

The ultrasonic welder used was from Hermann Ultraschall, type HiQ Dialog, having a moving mass without sonotrode of 10.8 kg, and a sonotrode weight of 1.790 kg. The number of contact points (or weld contacts) was 5 per cm and the weld length ($d_6$) was 0.5 cm. The converter amplitude was 13.3 $\mu$m at a frequency of 20 kHz with a nominated generator power of 6200 W. The total weld energy per weld was kept at 150 J/weld, but welding time was varied in the experiments depending on the panel type.

To weld two panels together, the panels were pair-wise arranged under the sonotrode with their respective flanges (11,21) in contact at the outer layers (31) thereby allowing the thermoplastic PU of each outer layer to melt in contact and form a weld.

Repeating the process and adding further panels allowed the inventor to manufacture paneled sports balls casings according to the subject of the invention. Sports balls' casings (soccer balls) were manufactured by the inventor based on all panel types, both panel types 30 and panel types 50.

Panel rupture strength was measured by clamping each of two attached panels to a respective movable clamp, symmetrically around the welded flange. Subsequently, the two movable clamps were moved in opposite directions, while maintaining identical, but opposite, velocities, thus maintaining a symmetrical force load on the welded flange during testing. For each test, force load and clamp displacement were recorded simultaneously until the two panels had come completely apart, either due to weld rupture or material failure.

The experiments were performed at pulling velocities (as known in the art) which were sufficiently low, such that the pulling tests were equivalent to a static pulling test, wherein loads are increased at zero velocity, reflecting only gravitational pull. Fast pulling was not performed. Under actual use of a sports ball, a short impact on a seam on the sports ball will provide a high force, but due to the shortness, the force experienced by the seam will approximate forces from the static experiments due to subsequent heat dissipation. Intermediate pulling speeds, however are to be avoided, as the seam cannot dissipate the heat of deformation, and hence experiences artificial flow from seam heating. The transition from observing testing artifacts from pulling velocity and to equivalence to static pulling must be individually determined for a given seam, being dependent of the actual material properties for the given seam. As such, and throughout the present text, pulling strengths given in Newtons are static pulling equivalents.

The maximum force load at rupture or material failure and likewise the panel displacement at rupture or material failure were used below for comparison between the panels for determining an apparent rupture strength for the welded panels, herein this disclosure called the pulling strength. This apparent rupture strength value is suitable for comparing panel bonding strengths in situations such as the present, where it is, in general, not possible to measure an actual rupture strength for bonded (sewn, glued or welded) sports balls panels due to the flexible construction of the panels and the flexibility of the constituent materials. The actual rupture strength is consequently dependent on too many independent variables for direct measurement. In particular for sewn sports panels, it is often observed that the panels' material fail prior to actual seam failure. Likewise, the movement velocity of the clamps influences the measurements significantly, but for same clamp velocities, the pulling strength used herein provides adequate comparative values, and further provides a normalized value, which is independent of pulling velocity.

In order therefore to allow comparison between the bonding strengths of different types of panels using different bonding methods, the present inventor used the above mentioned apparent rupture strength or pulling strength, which (for constant clamp movement velocity) in rough numbers allows comparison between inter-panel bonding strengths for like panels which have been differently bonded.

Therefore, and in the context of the present disclosure, the apparent rupture strength or pulling strength is equal to the maximum force load ($F_{max}$) at weld rupture or material failure in Newton / ((maximum clamp displacement in mm ($dL(F_{max})$) × outer layer thickness in mm, $d_1$) as according to equation [1]

$$[1] \qquad pulling\ strength\ = \frac{F_{max}}{dL(F_{max}) * d_1}$$

when the pulling measurement is performed as detailed above.

Experiment 1: Panels 30a and 30b

The prior art ball casing according to WO 2013/148947 is obtained by welding the flange areas in one step. The heat applied during welding process according to WO 2013/148947 is sufficient for a transition of thermoplastic polymer material forming a middle layer to either a softened state or a liquid state, and the formation of a weld or weld seam upon cooling. Thus, the technique involves a softening or melting of a thermoplastic polymer material within at least one of the elements such that the elements are secured to each other when cooled. Therefore, the thermoplastic foam material of WO 2013/148947 is weldable.

Initial experiments showed, as expected and discussed above, that the foam of the middle layer (32) welded in one step as in WO 2013/148947 attenuated the ultrasonic waves significantly leading to insufficient welding of the outer layer (31) and inter-panel bonding. The measured weld strengths for weld seams according to WO 2013/148947 did not exceed 50 N in the present inventor's experiments, and were found insufficient for high quality welding as intended in the context of the present invention.

This problem could surprisingly be overcome by a two-step process, wherein the foam was first collapsed at low ultrasonic energies (in the present experiments below 100 J/weld), thereby avoiding burning of the foam, before applying, in a second step, the high ultrasonic energies required for heating the thermoplastic PU-layers to their welding temperatures across the collapsed foam.

When the foam is collapsed in the first step according to this embodiment, air escapes from the foam and thereby flattens the foam without changing the solid state of the foam polymeric material.

The collapsed foam is non-weldable. This is contrary to the state transformation of the polymeric foam material as described in WO 2013/148947, wherein the foam is melted during the welding process and thus is weldable.

No significant damage to the foam layer was observed by the inventor after collapse in line with the general observation in ultrasonic welding that ultrasonic energy is insufficiently deposited in dense materials. Rather, it appears that all available energy was deposited in the TPU-layer for melting and weld-formation and that the formed thin, not weldable flange layer adjacent to the weldable layer was substantially opaque to ultrasonic wave energy at the chosen ultrasonic frequency.

A surprising benefit of this discovery is, that the thin, not weldable flange layer adjacent to the weldable layer necessary for decoupling the weld seam from the weld head, which is the subject of the present invention, can be manufactured in situ e.g. from the foam of the middle layer (32), and that hence the present invention is suitable for use with panels of both type 30a, as well as for panels of type 30b.

Table 1 comprises the results for the measurements on the panels 30a and 30b.

Experiment 2: Panels 50a and 50b

As no difference between the flange regions (21) exists between the two types of panels (50a,50b), only panel types 50b were tested in relation to pulling strength.

Table 1 comprises the results for the measurements on the panels 50b.

In Table 1 the following short hand forms are used: P-S = pulling strength, W-R = weld rupture, M-F = material failure.

**TABLE 1**

| Sample | Fmax [N] | dL ($F_{max}$) [mm] | $d_1$ [mm] | P-S [N/mm$^2$] | Comment |
|--------|----------|---------------------|------------|----------------|---------|
| 30a | 161 | 17.1 | 1 | 9.42 | M-F |
| 30b | 123 | 10.8 | 1 | 11.39 | W-R |
| 50b - 1 | 125 | 33.2 | 1 | 3.77 | M-F |
| 50b - 2 | 91.6 | 30.8 | 1 | 2.97 | M-F |
| 50b - 3 | 65.3 | 21.0 | 1 | 3.10 | M-F |
| 50b - 4 | 84.9 | 32.0 | 1 | 2.65 | M-F |
| 50b - 5 | 107 | 31.4 | 1 | 3.41 | W-R |
| 50b - 6 | 144 | 32.2 | 1 | 4.47 | W-R |
| 50b - 7 | 119 | 30.2 | 1 | 3.94 | W-R |
| 50b - 8 | 47.1 | 18.2 | 1 | 2.59 | M-F |

As can be seen from the results, the welded panels comprising a thin, not weldable flange layer for decoupling the weld seam from the weld head, were at least a factor of (panel 30a)/(panel 50b-6) = 9.42/4.47 = 2.11 better than their comparisons, which is considered significant irrespective of the otherwise relative value of the pulling strength (apparent rupture strength).

In general, no surprising dependency on the weld strength was observed due to other experimental parameters. It is considered that any rupture force above about 100 N is representative of a fully formed weld under the given experimental conditions, i.e. material thickness, $d_3$, and material (TPU) (average pulling strength of 3.9 $\pm$ 0.4) and that the supplied energy (150 J/weld) was sufficient at the given material thickness to achieve complete melting of the two adjacent TPU-layers, if sufficiently long welding times were applied, in order to allow for sufficient time for heat propagation and melting rather than burning and hardening of the TPU-layer.

Some of the welds, 30a, 30b, 50b-1, 50b-6 were of a weld strength of over 120 N and therefore comparable in strength to that of machine sewn panels, but only the panels 30a, 30b were reproducibly of the same weld strength as machine sewn panels.

In general, the respective energies and welding times must be individually adapted for a given material and sheet thickness of the outer layer ($d_1$). Therefore, and since a number of experimental settings will yield a complete weld, no surprising effects based on these parameters were observed in the context of the present disclosure. Nevertheless, the observed improvements relate to fully formed welds. Incompletely formed welds will naturally provide a different picture and will yield lower inter-panel bond strengths from welding.

The panels of type 50b all show significantly longer stretching before rupture $dL(F_{max})$ than the panels of type 30. The stretching was observed to be irreversible for the panels of type 50b. The inventor considers (without being bound by these considerations) that this effect is due to inelastic and irreversible deformations (stretching) of the thermoplastic outer layer (31), which is strongly unwanted in a sports ball's casing, in particular in a sports ball's casing for use in a sports ball for professional sports.

The inventor considers (again without being bound by these considerations) that the observed improvement in bond quality is due to an unexpected synergistic effect of the two panel layers present on the flanges of panels 30, whereby resiliency to pulling forces is introduced into the weld. This effect is surprising and unexpected, as only the thermoplastic PU-layer forms part of the weld.

Such a resiliency to pulling forces is much desired in sports balls casings in general, as the panel seams may otherwise deform under the influence of a large external force, e.g. when a soccer ball is kicked in a soccer match by a highly trained professional soccer player (easily exceeding 100 N kicking force), whereby roundness of the soccer ball is maintained during play.

## CLOSING COMMENTS

The term "comprising" as used in the claims does not exclude other elements or steps. The term "a" or "an" as used in the claims does not exclude a plurality. A single processor or other unit may fulfill the functions of several means recited in the claims.

Although the present invention has been described in detail for purpose of illustration, it is understood that such detail is solely for that purpose, and variations can be made therein by those skilled in the art without departing from the scope of the invention, as defined by the appended claims.

## Claims

**1.** A method of making a sports ball's casing (la,lb), the casing (1a,1b) comprising a predetermined plurality of flange welded panels (3), and defining an exterior surface (2a) comprising a network of grooves (9), and an interior surface (2b) comprising a network of weld seams (4) oriented substantially perpendicular to said exterior surface (2a), each panel (3) comprising a weldable, thermoplastic outer layer (31) for forming part of said exterior surface (2a) and a further layer (32,33,34) for forming part of said interior surface (2b), and where on each panel (3) there is defined a panel center area (13,23) peripherally enclosed by flanges (11,21), said flanges (11,21) comprising at least a part of said weldable, thermoplastic outer layer (31); said method comprising:

      i. providing at least a first (41) and a second (42) panel (3) comprising respective flanges (11,21);
      ii. providing on a respective flange (11,21) a thin, not weldable flange layer (34) adjacent to the weldable, thermoplastic outer layer (31);
      iii. forming a weld seam (4) using ultrasound between the thermoplastic outer layer (31) of a respective flange on the first panel (41) in contact with the thermoplastic outer layer (31) of an abutting, respective flange on the second panel (42) thereby forming a combined panel such that the thin non weldable flange layer (34) is positioned adjacent to the weldable layer (31) between an ultrasound weld head and the panel flanges when forming a weld seam (4) .

**2.** A method according to claim 1 comprising:

      iv. welding a further and free flange (11,21) of said combined panel to a respective further flange (11,21) of a respective further panel (3) along abutting respective flanges (11,21); and
      v. repeating adding and welding panels until substantially all respective flanges of said predetermined plurality of panels (3) are welded to respective, matching flanges on respective further panels.

**3.** A method according to any of the previous claims, wherein one panel (7) comprises a valve (8).

**4.** A method according to any of the previous claims, wherein said thin, not weldable flange layer (34) is selected from a polymer foam material, a non-thermoplastic foam, a collapsed polymer foam material, a fabric or combinations thereof.

5. A method according to any of the previous claims, wherein said thin, not weldable flange layer (34) is manufactured in-situ prior to welding.

6. A method according to any of the previous claims, wherein a triple-point (86) between three adjacent flanges (21a,21b,21c) is closed by welding.

**Patentansprüche**

1. Verfahren zur Herstellung eines Sportballgehäuses (1a,1b), wobei das Gehäuse (1a,1b) eine vorbestimmte Vielzahl von flanschgeschweißten Elementen (3) umfasst und eine Außenfläche (2a), die ein Netz von Rillen (9) umfasst, und eine Innenfläche (2b), die ein Netz von Schweißnähten (4) umfasst, die im Wesentlichen senkrecht zur Außenfläche (2a) ausgerichtet sind, definiert, wobei jedes Element (3) eine schweißbare thermoplastische Außenschicht (31) zur Bildung eines Teils der Außenfläche (2a) und eine weitere Schicht (32,33,34) zur Bildung eines Teils der Innenfläche (2b) umfasst, und wobei auf jedem Element (3) ein Elementemittelbereich (13,23) definiert ist, der am Umfang von Flanschen (11,21) umschlossen ist, wobei die Flansche (11,21) zumindest einen Teil der schweißbaren, thermoplastischen Außenschicht (31) umfassen; wobei das Verfahren umfasst:

   i. Bereitstellen mindestens eines ersten (41) und eines zweiten (42) Elements (3) mit entsprechenden Flanschen (11,21) ;
   ii. Bereitstellen einer dünnen, nicht schweißbaren Flanschschicht (34), die an die schweißbare, thermoplastische Außenschicht (31) angrenzt, auf einem jeweiligen Flansch (11, 21);
   iii. Bilden einer Schweißnaht (4) mittels Ultraschall zwischen der thermoplastischen Außenschicht (31) eines jeweiligen Flansches auf dem ersten Element (41) der in Kontakt mit der thermoplastischen Außenschicht (31) eines angrenzenden jeweiligen Flansches auf dem zweiten Element (42) steht, wodurch ein kombiniertes Element gebildet wird, so dass die dünne, nicht schweißbare Flanschschicht (34) beim Bilden einer Schweißnaht (4) angrenzend an die schweißbare Schicht (31) zwischen einem Ultraschallschweißkopf und den Elementflanschen positioniert ist.

2. Verfahren nach Anspruch 1, umfassend:

   iv. Verschweißen eines weiteren und freien Flansches (11,21) des kombinierten Elements mit einem entsprechenden weiteren Flansch (11,21) eines entsprechenden weiteren Elements (3) entlang aneinanderstoßender entsprechender Flansche (11,21); und
   v. wiederholtes Hinzufügen und Verschweißen von Elementen, bis im Wesentlichen alle jeweiligen Flansche der vorbestimmten Vielzahl von Elementen (3) mit jeweiligen passenden Flanschen an jeweiligen weiteren Elementen verschweißt sind.

3. Verfahren nach einem der vorstehenden Ansprüche, wobei ein Element (7) ein Ventil (8) umfasst.

4. Verfahren nach einem der vorstehenden Ansprüche, wobei die dünne, nicht schweißbare Flanschschicht (34) aus einem Polymerschaumstoff, einem nichtthermoplastischen Schaumstoff, einem kollabierten Polymerschaumstoff, einem Gewebe oder Kombinationen davon ausgewählt ist.

5. Verfahren nach einem der vorstehenden Ansprüche, wobei die dünne, nicht schweißbare Flanschschicht (34) vor dem Schweißen vor Ort hergestellt wird.

6. Verfahren nach einem der vorstehenden Ansprüche, wobei eine Dreipunktstelle (86) zwischen drei benachbarten Flanschen (21a,21b,21c) durch Schweißen geschlossen wird.

**Revendications**

1. Procédé de fabrication d'un boîtier de ballon de sport (1a, 1b), le boîtier (1a, 1b) comprenant une pluralité prédéterminée de panneaux soudés par rebord (3), et définissant une surface extérieure (2a) comprenant un réseau de rainures (9), et une surface intérieure (2b) comprenant un réseau de cordons de soudure (4) orientés sensiblement perpendiculairement à ladite surface extérieure (2a), chaque panneau (3) comprenant une couche externe thermoplastique soudable (31) pour former une partie de ladite surface extérieure (2a) et une autre couche (32, 33, 34) pour former une partie de ladite surface intérieure (2b), et où sur chaque panneau (3) il est défini une zone centrale de panneau (13, 23) entourée périphériquement par des rebords (11, 21), lesdits rebords (11, 21) comprenant au moins une partie de ladite couche externe thermoplastique soudable (31) ; ledit procédé comprenant :

> i. la fourniture d'au moins un premier (41) et un second (42) panneau (3) comprenant des rebords respectifs (11, 21) ;
> ii. la fourniture sur un rebord respectif (11, 21) d'une fine couche de rebord non soudable (34) adjacente à la couche externe thermoplastique soudable (31) ;
> iii. la formation d'un cordon de soudure (4) à l'aide d'ultrasons entre la couche externe thermoplastique (31) d'un rebord respectif sur le premier panneau (41) en contact avec la couche externe thermoplastique (31) d'un rebord respectif en butée sur le second panneau (42) formant ainsi un panneau combiné de sorte que la fine couche de rebord non soudable (34) soit positionnée adjacente à la couche soudable (31) entre une tête de soudage par ultrasons et les rebords de panneau lors de la formation d'un cordon de soudure (4).

2. Procédé selon la revendication 1 comprenant :

> iv. le soudage d'un autre rebord libre (11, 21) dudit panneau combiné à un autre rebord respectif (11, 21) d'un autre panneau respectif (3) le long de rebords respectifs aboutés (11, 21) ; et
> v. la répétition de l'ajout et du soudage de panneaux jusqu'à ce que sensiblement tous les rebords respectifs de ladite pluralité prédéterminée de panneaux (3) soient soudés à des rebords correspondants respectifs sur d'autres panneaux respectifs.

3. Procédé selon l'une quelconque des revendications précédentes, dans lequel un panneau (7) comprend une soupape (8) .

4. Procédé selon l'une quelconque des revendications précédentes, dans lequel ladite fine couche de rebord non soudable (34) est choisie parmi un matériau en mousse polymère, une mousse non thermoplastique, un matériau en mousse polymère affaissé, un tissu ou leurs combinaisons.

5. Procédé selon l'une quelconque des revendications précédentes, dans lequel ladite fine couche de rebord non soudable (34) est fabriquée in situ avant le soudage.

6. Procédé selon l'une quelconque des revendications précédentes, dans lequel un point triple (86) entre trois rebords adjacents (21a, 21b, 21c) est fermé par soudage.

Figure 1

Figure 2

Figure 3

Figure 4

Figure 5

Figure 6

70a

A

31  34  32

70b

74a

B

31  34  32

$d_8$

70b

74b

C

32f

31  34  32

$d_8$

# Figure 7

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8262519 B

- WO 2013148947 A